# FASCICULE DE BREVET EUROPEEN

(11) **EP 2 263 339 B1**
(45) Date de publication et mention de la délivrance du brevet: **05.04.2017**
(21) Numéro de dépôt: 09718582.1
(22) Date de dépôt: 26.02.2009
(51) Int. Cl.: H04J 14/02

(54) **DISPOSITIF ET PROCÉDÉ DE GESTION DE LA PUISSANCE D'ÉMISSION D'UNE SOURCE OPTIQUE EN FONCTION DU NIVEAU DE PERTES OPTIQUES D'UNE LIAISON OPTIQUE**
VORRICHTUNG UND VERFAHREN ZUR VERWALTUNG DER SENDELEISTUNG EINER OPTISCHEN QUELLE AUF BASIS DER OPTISCHEN VERLUSTE EINER OPTISCHEN VERBINDUNG
DEVICE AND METHOD FOR MANAGING THE TRANSMISSION POWER OF AN OPTICAL SOURCE BASED ON THE LEVEL OF OPTICAL LOSSES IN AN OPTICAL LINK

(30) Priorité: 28.02.2008 FR 0851292
(43) Date de publication de la demande: 22.12.2010
(73) Titulaire: Orange, 75015 Paris (FR)
(72) Inventeur: POIRRIER, Julien, F-Locquemeau 22300 (FR); PAYOUX, Franck, F-92220 Bagneux (FR); CHANCLOU, Philippe, F-22300 Lannion (FR)
(86) Numéro de dépôt international: PCT/FR2009/050308
(87) Numéro de publication internationale: WO 2009/112767

(56) Documents cités:
- US-A1- 2004 208 562
- US-B1- 6 396 575
- SENIOR J M ET AL: "NEW WAVELENGTH ASSIGNMENT SCHEMES FOR WAVELENGTH DIVISION MULTIPLEXED PASSIVE OPTICAL NETWORKS" PROCEEDINGS OF SPIE-THE INTERNATIONAL SOCIETY FOR OPTICAL ENGINEERING, SPIE, BELLINGHAM, VA; US, vol. 4213, 1 janvier 2000 (2000-01-01), pages 73-83, XP009062747
- KANG ET AL: "A single to multi-wavelength converter using Fabry-Perot laser diode with linear optical amplifier and its applications to the wavelength division multiplexing-passive optical network system" OPTICS COMMUNICATIONS, NORTH-HOLLAND PUBLISHING CO. AMSTERDAM, NL, vol. 254, no. 4-6, 15 octobre 2005 (2005-10-15), pages 223-235, XP005086131 ISSN: 0030-4018
- SOERENSEN S: "Optical Beat Noise Suppression and Power Equalization in Subcarrier Multiple Access Passive Optical Networks by Downstream Feedback" JOURNAL OF LIGHTWAVE TECHNOLOGY, IEEE SERVICE CENTER, NEW YORK, NY, US, vol. 18, no. 10, 1 octobre 2000 (2000-10-01), XP011029800 ISSN: 0733-8724

## Description

L'invention se situe dans le domaine des télécommunications, et plus particulièrement le domaine des réseaux d'accès optiques passifs ou PON (*Passive Optical Network).*

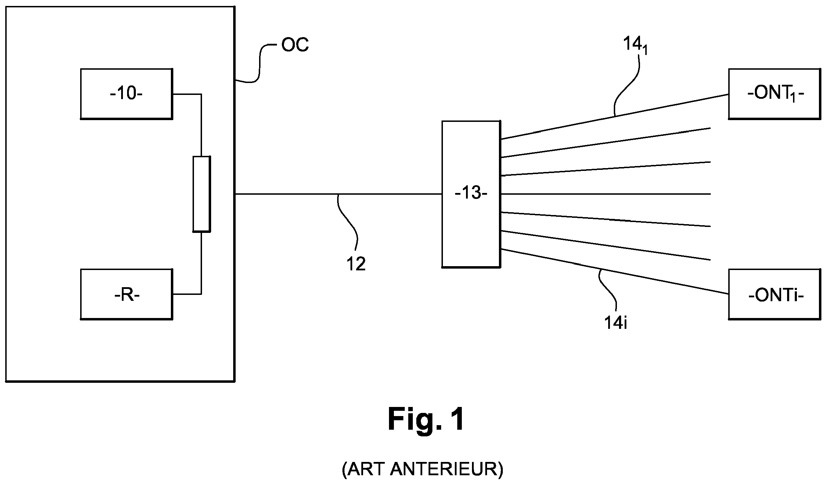

Un réseau optique passif est un réseau arborescent du type point à multipoints. Un tel réseau est représenté sur la figure 1. Le réseau comporte à une première extrémité un équipement terminal central OLT (*Optical Line Termination* en anglais) généralement situé dans un central de télécommunication OC (*Central Office* en anglais) à la sortie duquel est connectée une première extrémité d'une fibre optique 12. Une deuxième extrémité de la fibre optique 12 est connectée à l'entrée d'au moins un multiplexeur de longueurs d'onde 13 avec N interfaces permettant de multiplexer/démultiplexer N longueurs d'ondes, N représentant le nombre de liaisons que possède le réseau. Une première extrémité d'une fibre optique 14ⱼ, j ∈ {1, 2, ..., N}, est connectée à l'une des N sorties du multiplexeur 13. Une deuxième extrémité de la fibre optique 14ⱼ est connectée à un équipement terminal ONUᵢ (*Optical Network Unit* en anglais), i ∈ {1, 2, ..., N} auquel sont connectés un ou plusieurs usagers. Le central optique OC comporte une pluralité de lasers émettant chacun une longueur d'onde qui lui est propre et servant à véhiculer des données à destination des différents abonnés connectés au réseau. Dans un tel réseau optique, chaque équipement terminal est associé à une composante optique issue du central optique et donc à une longueur d'onde particulière. Enfin, le central optique comporte également des moyens de réception R recevant les signaux émis par les équipements terminaux.

Le réseau optique passif décrit précédemment utilise le multiplexage en longueurs d'onde ou WDM (*Wavelength-Division Muliplexing*).

Dans un tel réseau optique passif, les différents lasers disposés au central optique émettent les composantes optiques avec une même puissance d'émission quelle que soit la longueur d'onde associée aux différentes composantes optiques.

Pour chaque liaison du réseau, la différence de puissance optique existant entre la puissance optique d'émission du laser disposé au central optique et la puissance optique reçue par les moyens de réception disposés dans les équipements terminaux représente le niveau de pertes optiques d'une liaison.

Les liaisons optiques d'un réseau d'accès optique peuvent présenter des niveaux de pertes optiques différents. Ceci est dû au fait que les différentes liaisons optiques n'ont pas toutes la même longueur, la même vétusté, etc. Chaque liaison optique présente un niveau de pertes optique qui lui est propre.

Par conséquent, l'équité de puissance d'émission au central optique entre les différents composantes optiques et donc entre les différentes liaisons optiques, ne se traduit pas par une équité de puissance de réception au niveau des différents équipements terminaux à cause des différents niveaux de pertes optiques des liaisons optiques. Cette différence de puissance de réception entre les différents usagers d'un même réseau d'accès optique peut se traduire par une disparité de la qualité de service.

La demande de brevet US 2004/0208562 décrit un réseau de transport optique en anneau dans lequel un multiplexage par blocs de longueurs d'onde est employé, les longueurs d'onde étant assignées dans cette demande aux noeuds de ce réseau en anneau en fonction de leur proximité par rapport à un noeud concentrateur (hub).

Le document "New wavelength assignment schemes for wavelength division multiplexed passive optical networks" (John M. Senior) décrit un réseau d'accès optique arborescent du type point à multipoint WDM dans lequel les longueur d'ondes sont allouées de manière dynamique.

Ainsi, il existe un besoin d'une solution qui permette d'offrir une qualité de service homogène entre les différents usagers d'un même réseau d'accès optique.

Les inventeurs de la présente demande de brevet répondent à ce besoin en proposant un dispositif d'émission d'un signal optique comprenant au moins deux composantes optiques destinées à être transmises au travers respectivement d'au moins deux liaisons optiques aptes à être respectivement établies entre le dispositif d'émission et au moins deux équipements terminaux.

Un tel dispositif est particulier en ce qu'il comprend des moyens d'association, en fonction d'au moins un paramètre représentatif de pertes optiques des liaisons optiques, d'au moins l'une des composantes optiques :
- à au moins une liaison optique choisie parmi lesdites liaisons optiques, et
- à une puissance optique d'émission.

En notant Lᵢ une liaison et λᵢ une composante optique du signal optique et Pᵢ une puissance optique d'émission, l'invention consiste donc à construire le triplet (λᵢ, Pᵢ, Lᵢ) optimal en fonction du niveau de pertes optiques affectant une liaison optique Li. Ainsi, il est possible de fournir une qualité de service équivalente à tous les usagers connectés au dispositif d'émission quel que soit le niveau de pertes optique des liaisons optiques les reliant au dispositif d'émission ou bien d'augmenter le nombre d'usagers connectés au dispositif d'émission. Chaque liaison optique transmet à l'équipement terminal qui lui est connecté une composante optique à laquelle est associée une puissance optique d'émission adaptée au paramètre représentatif des pertes optiques de la liaison optique considérée.

Ainsi, une composante optique transmise au travers d'une liaison optique présentant des pertes optiques élevées est associée à une puissance optique d'émission élevée, alors qu'une composante optique transmise au travers d'une liaison optique présentant des pertes optiques faibles est associée à une puissance optique d'émission faible.

Selon une caractéristique du dispositif objet de l'invention, le signal optique ayant une puissance d'émission globale répartie de manière prédéterminée entre une pluralité de puissances optiques d'émission respectivement associées auxdites composantes optiques, les moyens d'association comprennent :
- des moyens d'ordonnancement desdites composantes optiques en fonction de leur puissance d'émission respective,
- des moyens de détermination de la liaison optique à associer à l'une desdites composantes optiques, en fonction dudit paramètre représentatif de pertes optique de ladite liaison optique.

Dans ce mode de réalisation, une puissance optique d'émission est associée à chaque composante optique de manière arbitraire.

Connaissant la puissance optique d'émission associée à chaque composante optique, la liaison destinée à transmettre la composante optique est déterminée en fonction du paramètre représentatif de ses pertes optiques.

Une telle implémentation est particulièrement avantageuse lors de la création d'un réseau optique.

Selon une caractéristique du dispositif objet de l'invention, celui-ci comprend également des moyens de modification de la répartition de la puissance d'émission globale dudit signal optique entre lesdites composantes optiques.

En appliquant une fonction de répartition de la puissance d'émission globale aux différentes composantes optiques du signal optique, on impose une répartition de la puissance d'émission globale entre celles-ci (par exemple, une fonction de répartition de la puissance décroissante linéaire en longueur d'onde permettant un ordonnancement direct des composantes optiques en fonction de leur puissance d'émission respective). Une fois la puissance d'émission répartie entre les différentes composantes optiques, celles-ci sont allouées aux liaisons optiques en fonction des besoins de ces dernières.

Selon une caractéristique du dispositif objet de l'invention, lesdites composantes optiques étant respectivement associées auxdites liaisons optiques, et le signal optique ayant une puissance d'émission globale répartie de manière prédéterminée entre une pluralité de puissances optiques d'émission respectivement associées auxdites composantes optiques, les moyens d'association comprennent des moyens de modification de la répartition de la puissance d'émission globale dudit signal optique entre lesdites composantes optiques, en fonction desdits paramètres représentatifs de pertes optiques des liaisons optiques.

Dans un réseau d'accès optique existant, les composantes optiques du signal optique sont déjà allouées à des liaisons optiques. L'architecture du réseau étant figée, revoir l'allocation des composantes optiques en fonction de leur puissance d'émission, comme proposé dans les implémentations de l'invention précédemment décrites, aurait pour conséquence une interruption de service préjudiciable et ferait courir le risque d'introduire des dysfonctionnements dus à la modification de l'architecture.

Ainsi, il devient avantageux de pouvoir adapter la puissance d'émission des composantes optiques du signal optique sans modifier l'architecture du réseau.

En adaptant la puissance d'émission d'une composante optique en fonction d'un paramètre représentatif des pertes optiques de la liaison associée à cette composante optique, il devient possible d'offrir à un usager dont l'équipement terminal constitue une extrémité de la liaison considérée, une qualité de service satisfaisante tout en optimisant la répartition de la puissance d'émission globale du dispositif d'émission entre les différentes composantes optiques du signal optique émis.

De plus, cette implémentation offre une grande flexibilité lors du rajout ou la suppression d'un usager dans le réseau puisqu'il suffit d'appliquer une nouvelle fonction de répartition de la puissance d'émission des composantes optiques une fois la nouvelle architecture en place.

L'invention concerne également un procédé d'émission d'un signal optique comprenant au moins deux composantes optiques destinées à être transmises au travers respectivement d'au moins deux liaisons optiques aptes à être respectivement établies entre un dispositif d'émission et au moins deux équipements terminaux.

Un tel procédé d'émission est particulier en ce qu'il comprend une phase d'association, en fonction d'un paramètre représentatif de pertes optiques des liaisons optiques, d'au moins l'une des composantes optiques :
- à une liaison optique choisie parmi lesdites liaisons optiques, et
- à une puissance optique d'émission.

Selon une particularité du procédé d'émission objet de l'invention, le signal optique ayant une puissance d'émission globale répartie de manière prédéterminée entre une pluralité de puissances optiques d'émission respectivement associées auxdites composantes optiques, la phase d'association comprend :
- une étape d'ordonnancement desdites composantes optiques en fonction de leur puissance d'émission respective,
- une étape de détermination de la liaison optique à associer à l'une desdites composantes optiques, en fonction dudit paramètre représentatif de pertes optique de ladite liaison optique.

Selon une particularité du procédé d'émission objet de l'invention, celui-ci comprend préalablement à la phase d'association, une étape de modification de la répartition de la puissance d'émission globale dudit signal optique entre lesdites composantes optiques.

Selon une particularité du procédé d'émission objet de l'invention, lesdites composantes optiques étant respectivement associées auxdites liaisons optiques, et le signal optique ayant une puissance d'émission globale répartie de manière prédéterminée entre une pluralité de puissances optiques d'émission respectivement associées auxdites composantes optiques, la phase d'association comprend une étape de modification de la répartition de la puissance d'émission globale dudit signal optique entre lesdites composantes optiques, en fonction desdits paramètres représentatifs de pertes optiques des liaisons optiques.

L'invention concerne encore un central de télécommunication d'un réseau d'accès optique comprenant au moins un dispositif d'émission d'un signal optique comprenant au moins deux composantes optiques destinées à être transmises au travers respectivement d'au moins deux liaisons optiques aptes à être respectivement établies entre le dispositif d'émission et au moins deux équipements terminaux.

Dans un tel central de télécommunication, le dispositif d'émission comprend des moyens d'association, en fonction d'un paramètre représentatif de pertes optique des liaisons optiques, d'au moins l'une des composantes optiques :
- à une liaison optique choisie parmi lesdites liaisons optiques, et
- à une puissance optique d'émission.

L'invention concerne enfin un programme d'ordinateur comprenant des instructions de code de programme pour l'exécution des étapes du procédé d'émission objet de l'invention lorsque ledit programme est exécuté par un processeur.

D'autres caractéristiques et avantages apparaîtront à la lecture de modes de réalisation particuliers décrits en référence aux dessins dans lesquels :
- la figure 1 représente un réseau d'accès optique passif selon l'art antérieur,
- la figure 2 représente un dispositif d'émission objet de l'invention,
- la figure 3A représente un dispositif d'émission selon un premier mode de réalisation de l'invention,
- la figure 3B est un diagramme représentant l'évolution de la puissance d'émission en fonction de la longueur d'onde des composantes optiques dans le premier mode de réalisation du dispositif objet de l'invention,
- la figure 4A représente un dispositif d'émission selon un deuxième mode de réalisation de l'invention,
- les figures 4B et 4C sont des diagrammes représentant l'évolution de la puissance d'émission en fonction de la longueur d'onde des composantes optiques dans le deuxième mode de réalisation du dispositif objet de l'invention,
- la figure 5A représente un dispositif d'émission selon un troisième mode de réalisation de l'invention,
- la figure 5B est un diagramme représentant l'évolution de la puissance d'émission en fonction de la longueur d'onde des composantes optiques dans le troisième mode de réalisation du dispositif objet de l'invention,
- la figure 6A illustre un algorithme de fonctionnement d'un procédé selon le premier mode de réalisation de l'invention,
- la figure 6B illustre un algorithme de fonctionnement d'un procédé selon le deuxième mode de réalisation de l'invention,
- la figure 6C un algorithme de fonctionnement d'un procédé selon le troisième mode de réalisation de l'invention.

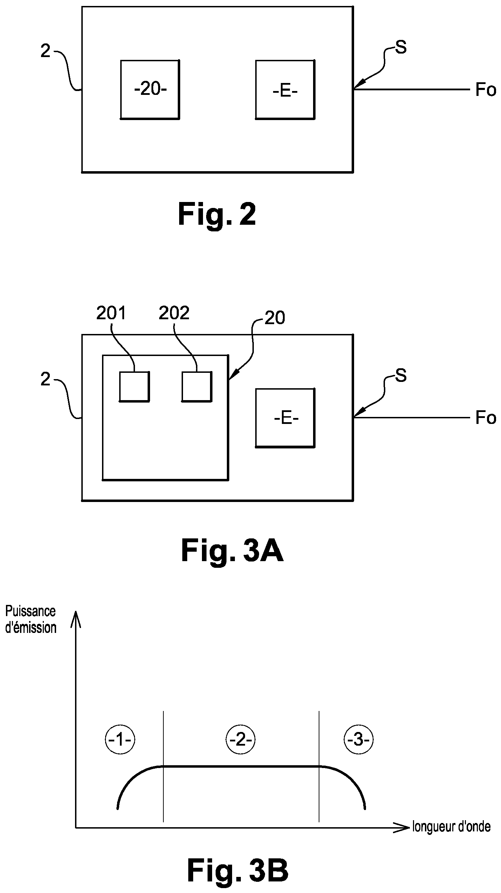

Un dispositif d'émission 2 selon l'invention, tel que représenté à la figure 2, comprend des moyens d'émission E d'un signal optique. Un tel signal optique comprend une pluralité de composantes optiques, chacune d'entre elles étant associée à une longueur d'onde particulière. Un tel dispositif 2 est disposé dans un central optique d'un réseau d'accès optique et est destiné à être connecté à au moins une liaison optique constitutive de ce réseau.

Les moyens d'émission E peuvent être, par exemple, constitués d'une source optique large bande ou d'une pluralité de lasers, chacun émettant dans une bande de longueurs d'ondes particulière.

Une source optique large bande est une source optique émettant de façon continu sur un large spectre de longueurs d'onde. Le spectre d'une source large bande est découpé en une pluralité de bandes spectrales. Chaque bande spectrale constitue une composante optique destinée à être transmise au travers d'une liaison optique.

Le diagramme représentant la puissance d'émission globale en fonction de la longueur d'onde d'émission d'une telle source peut se décomposer en trois parties ; une première partie correspondant sensiblement aux longueurs d'onde courtes, dans laquelle la puissance augmente avec la longueur d'onde, une deuxième partie dans laquelle la puissance est constante quelle que soit la longueur d'onde, et une troisième partie correspondant sensiblement aux longueurs d'ondes longues, dans laquelle la puissance décroît en fonction de la longueur d'onde. Un tel diagramme est représenté à la figure 3B.

Classiquement, une source large bande est utilisée dans la deuxième partie du diagramme attribuant ainsi une même puissance d'émission à toutes les composantes optiques indépendamment de la liaison optique dans laquelle elles sont destinées à être transportées.

Lorsque les moyens d'émission E sont constitués d'une pluralité de lasers, chacune des composantes optiques émises par les différents lasers est émise avec une puissance d'émission identique. Ainsi, tout comme dans le cas de la source optique large bande, quelle que soit la longueur d'onde d'une composante optique, la puissance d'émission est constante.

Le dispositif d'émission 2 comprend également, selon l'invention, des moyens d'association 20 d'une composante optique à une liaison optique et à une puissance optique d'émission, en fonction d'un paramètre représentatif des pertes optiques des liaisons optiques du réseau.

Une sortie S du dispositif d'émission 2 est connectée à une extrémité d'une fibre optique FO constituant une liaison optique du réseau d'accès optique.

Dans un réseau optique, toutes les liaisons optiques constitutives du réseau présentent des pertes optiques. Ces pertes optiques peuvent avoir diverses origines : la longueur de la liaison (plus une liaison est longue plus elle présente des pertes optiques élevées) ; le vieillissement de la fibre constituant la liaison optique (en effet plus une fibre optique est âgée, plus ses pertes optiques sont élevées) ; le nombre de composants optiques présents sur la liaison, tels que des multiplexeurs par exemple ; une altération de la fibre optique, telle qu'une fissure.

Ainsi, chaque liaison optique du réseau optique présente un paramètre caractéristique, représentatif de ses pertes optiques.

Les moyens d'association 20 permettent d'associer une composante optique, une liaison optique et une puissance optique d'émission de telle sorte que la composante d'émission est transmise au travers de la liaison optique associée avec une puissance optique d'émission adaptée au paramètre représentatif des pertes optiques de la liaison optique associée.

Afin de pouvoir réaliser cette association, il est nécessaire que les moyens d'association 20 connaissent pour chaque liaison optique du réseau optique la valeur du paramètre représentatif du niveau de pertes optiques.

Pour avoir accès à cette information, le central optique OC émet au travers de chacune des liaisons optiques un signal optique de test. Ce signal optique de test est émis ave une puissance d'émission connue. A réception du signal optique de test, chaque équipement terminal mesure la puissance optique reçue et émet cette information à destination du central optique.

Pour chaque équipement terminal, et par conséquent pour chaque liaison optique, le central optique compare la puissance optique reçue par l'équipement terminal avec la puissance optique reçue optimale nécessaire au fonctionnement de l'équipement terminal et en déduit le niveau de pertes optiques de la liaison optique reliant le central optique à l'équipement terminal.

Ainsi, si une liaison optique présente une valeur élevée du paramètre représentatif des pertes optiques, alors la puissance d'émission de la composante optique destinée à être transmise au travers de la liaison optique considérée est choisie afin de compenser les pertes optiques de la liaison optique.

L'adaptation de la puissance d'émission des composantes optiques issues des moyens d'émission E se fait sans modification de la puissance d'émission globale des moyens d'émission E. En effet, l'invention propose de répartir de manière rationnelle la puissance d'émission globale des moyens d'émission E entre les différentes composantes optiques en fonction des besoins des liaisons optiques dans lesquelles elles transitent. Ainsi, si une composante optique doit voir sa puissance d'émission augmenter, en compensation, une ou plusieurs autres composantes optiques voient leur puissance d'émission diminuer. La puissance d'émission globale effectivement utilisée peut être inférieure à la puissance d'émission globale maximale des moyens d'émission.

Un premier mode de réalisation du dispositif d'émission 2 est représenté à la figure 3A. Les éléments constitutifs du dispositif d'émission 2 communs au mode de réalisation décrit en référence à la figure 2 portent les mêmes références et ne seront pas décrits de nouveau. Ce mode de réalisation est particulièrement avantageux à mettre en oeuvre lors de la création d'un réseau d'accès optique.

Dans ce mode de réalisation, le diagramme représentant la puissance d'émission globale en fonction de la longueur d'onde d'émission de la composante optique correspond au diagramme représenté à la figure 3B et décrit précédemment.

L'invention propose d'utiliser les moyens d'émission E au-delà de leur plage utile, c'est-à-dire en utilisant également les longueurs d'onde appartenant aux première et troisième parties du diagramme. Dans ce cas, la répartition de la puissance d'émission globale des moyens d'émission est connue et chaque composante optique est associée une puissance optique d'émission particulière.

Les moyens d'association 20 comprennent des moyens d'ordonnancement 201 des composantes optiques en fonction de leur puissance optique d'émission. Les composantes optiques peuvent, par exemple, être classées dans l'ordre décroissant : de celles présentant la puissance d'émission la plus élevée à celles présentant la puissance d'émission la plus faible.

Les moyens d'association 20 comprennent également des moyens de détermination 202 des liaisons optiques à associer aux différentes composantes optiques. La détermination d'une liaison optique à associer à une composante optique particulière est fonction du paramètre représentatif des pertes optiques de la liaison optique considérée.

Ainsi, on obtient une association composante optique, liaison optique et puissance d'émission, telle que la puissance reçue par l'équipement terminal connecté à la liaison optique transmettant la composante optique est suffisante pour assurer une qualité de service satisfaisante à l'usager connecté à l'équipement terminal.

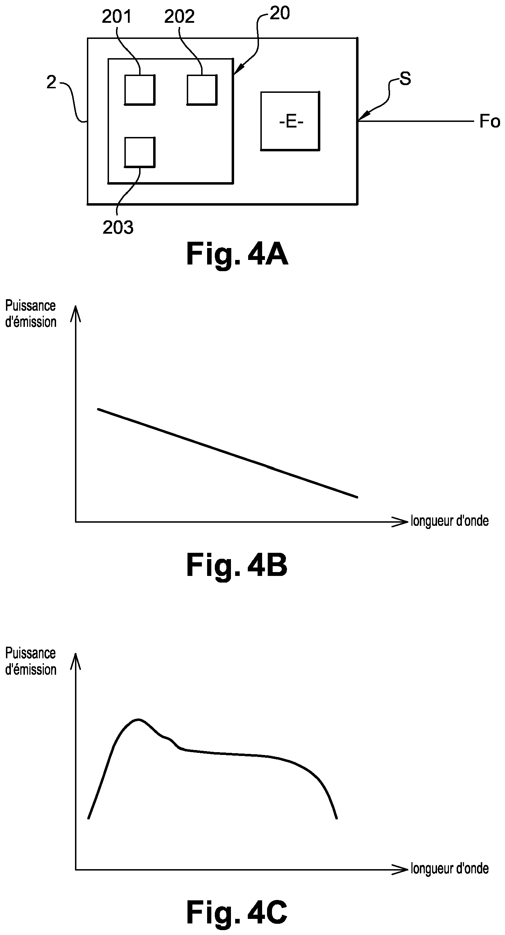

Un deuxième mode de réalisation du dispositif d'émission 2 est représenté à la figure 4A. Les éléments constitutifs du dispositif d'émission 2 communs au mode de réalisation décrit en référence aux figures 3A et 3B portent les mêmes références et ne seront pas décrits de nouveau. Ce mode de réalisation est, lui aussi, particulièrement avantageux à mettre en oeuvre lors de la création d'un réseau d'accès optique.

Le dispositif d'émission 2 comprend en outre des moyens de modification 203 de la répartition de la puissance d'émission globale du signal optique entre les différentes composantes optiques. Une fonction de répartition est appliquée par exemple à une source optique large bande dont le diagramme représentant la puissance d'émission globale en fonction de la longueur d'onde d'émission est représentée à la figure 3B afin de modifier la répartition de la puissance d'émission globale du signal optique.

Après application d'une telle fonction de répartition, on obtient un diagramme représentant la puissance d'émission globale en fonction de la longueur d'onde d'émission tel que représenté à la figure 4B. La nouvelle répartition de la puissance globale d'émission est une droite de coefficient directeur négatif. Il est possible d'obtenir d'autres types de profils, comme par exemple un profil avec une bosse de bruit (voir figure 4C). La répartition de la puissance d'émission globale des moyens d'émission est alors connue et chaque composante optique est associée une puissance optique d'émission particulière.

Une fois la fonction de répartition appliquée, les composantes optiques sont ordonnées par les moyens d'ordonnancement 201, puis les liaisons optiques à associer aux différentes composantes optiques sont déterminées à l'aide des moyens de détermination 202.

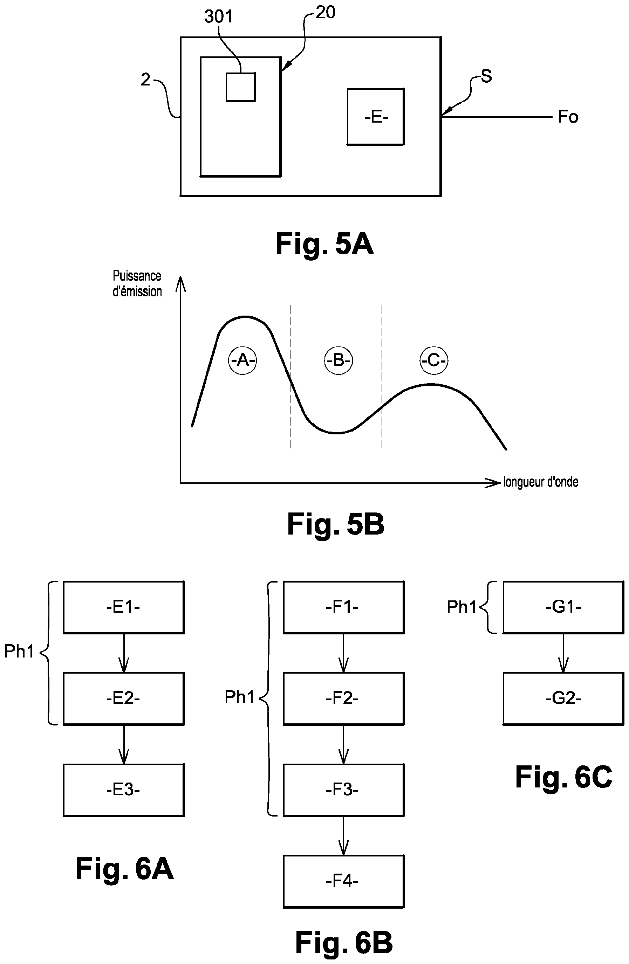

Un troisième mode de réalisation du dispositif d'émission 2 est représenté à la figure 5A. Les éléments constitutifs du dispositif d'émission 2 communs au mode de réalisation décrit en référence aux figures 4A et 4B portent les mêmes références et ne seront pas décrits de nouveau.

Le dispositif d'émission 2 est connecté à un réseau d'accès optique du type point à multipoint, tel qu'un réseau optique passif ou PON. Le dispositif d'émission 2 est donc connecté à une pluralité d'équipements terminaux par autant de liaisons optiques. Chacun de ces équipements terminaux, et par conséquent, chacune des liaisons optiques est associé à une composante optique lors du raccordement des équipements terminaux au dispositif d'émission 2. De plus, la puissance d'émission globale des moyens d'émission est répartie entre les différentes composantes optiques de sorte que chacune d'entre elles est associée une puissance optique d'émission particulière.

Dans un tel dispositif d'émission 2, les moyens d'association 20 comportent des moyens de modification 301 de la répartition de la puissance d'émission globale du signal optique entre les différentes composantes optiques en fonction du paramètre représentatif des pertes optiques des liaisons optiques associées aux différentes composantes optiques.

Ainsi, l'application d'une fonction de répartition permet de répartir la puissance globale d'émission entre les différentes composantes optiques en fonction des besoins des liaisons optiques auxquelles celles-ci sont associées. La répartition de la puissance globale d'émission s'adapte à l'architecture du réseau d'accès optique.

On obtient alors le diagramme représentant la puissance d'émission globale en fonction de la longueur d'onde d'émission représenté à la figure 5B. Ce diagramme se décompose essentiellement en trois parties A, B et C. Dans la partie A du diagramme, on voit que la puissance d'émission des composantes optiques est élevée, ce qui signifie que ces composantes optiques sont associées à des liaisons optiques ayant un paramètre représentatif des pertes optiques élevé. Dans la partie B du diagramme, les composantes optiques sont associées à des liaisons optiques ayant un paramètre représentatif des pertes optiques plus faible et se voient donc allouer une puissance d'émission plus faible. Enfin dans la partie C du diagramme, les composantes optiques étant associées à des liaisons optiques ayant un paramètre représentatif des pertes optiques plus faible que celui des liaisons optiques correspondant à la partie A du diagramme mais plus élevé que celui des liaisons optiques correspondant à la partie B du diagramme, celles-ci se voient allouer une puissance d'émission plus faible que celle allouée aux composantes optiques de la partie A du diagramme mais plus élevée que celle allouée aux composantes optiques de la partie B du diagramme.

La figure 6A représente les étapes mises en oeuvre par un procédé d'émission relatif au premier mode de réalisation de l'invention. Dans ce mode de réalisation, la puissance d'émission globale des moyens d'émission est répartie entre les différentes composantes optiques de manière connue. Ainsi, chaque composante optique est également associée à une puissance optique d'émission particulière.

Au cours d'une étape E1, les composantes optiques sont ordonnées en fonction de leur puissance optique d'émission respective.

Au cours d'une étape E2, les liaisons optiques à associer aux différentes composantes optiques sont déterminées en fonction de leurs paramètres représentatifs des pertes optiques respectifs.

A l'issue de l'étape E2, on obtient une association composante optique, liaison optique et puissance d'émission, telle que la puissance reçue par l'équipement terminal connecté à la liaison optique transmettant la composante optique est suffisante pour assurer une qualité de service satisfaisante à l'usager connecté à l'équipement terminal.

Les étapes E1 et E2 correspondent à une phase PH1 d'association d'une composante optique à une liaison optique et à une puissance optique d'émission, en fonction d'un paramètre représentatif des pertes optiques des liaisons optiques du réseau.

A l'issue de la phase PH1, le signal optique est émis par les moyens d'émission E et transmis au cours d'une étape E3 aux différents équipements terminaux.

La figure 6B représente les étapes mises en oeuvre par un procédé d'émission relatif au deuxième mode de réalisation de l'invention. Dans ce mode de réalisation, la puissance d'émission globale des moyens d'émission est répartie entre les différentes composantes optiques de manière connue. Ainsi, chaque composante optique est également associée à une puissance optique d'émission particulière.

Au cours d'une étape F1 de modification de la répartition de la puissance d'émission globale du signal optique entre les différentes composantes optiques, une fonction de répartition est appliquée aux différentes composantes optiques du signal optique. L'application d'une telle fonction de répartition permet d'obtenir une répartition de la puissance d'émission globale des moyens d'émission connue. Ainsi, chaque composante optique est associée une puissance optique d'émission particulière.

Au cours d'une étape F2, les composantes optiques sont ordonnées en fonction de leur puissance d'émission respective.

Au cours d'une étape F3, les liaisons optiques à associer aux différentes composantes optiques sont déterminées en fonction de leurs paramètres représentatifs des pertes optiques respectifs.

Les étapes F1 à F3 correspondent à la phase PH1 de modification de la répartition de la puissance d'émission globale du signal optique.

A l'issue de la phase PH1, le signal optique est émis par les moyens d'émission E et transmis au cours d'une étape F4 aux différents équipements terminaux.

La figure 6C représente les étapes mises en oeuvre par un procédé d'émission relatif au troisième mode de réalisation de l'invention. Dans ce mode de réalisation, chaque composante optique est associée à une liaison optique particulière et la puissance d'émission globale des moyens d'émission est répartie entre les différentes composantes optiques de manière connue. Ainsi, chaque composante optique est également associée à une puissance optique d'émission particulière.

Au cours d'une étape de modification G1 de la répartition de la puissance d'émission globale du signal optique entre les différentes composantes optiques, une fonction de répartition est appliquée aux différentes composantes optiques du signal optique. Cette fonction permet d'associer à chaque composante optique une puissance d'émission adaptée au paramètre représentatif des pertes optiques de la liaison optique à laquelle la composante optique est associée.

L'étape G1 correspond à la phase PH1 de modification de la répartition de la puissance d'émission globale du signal optique.

A l'issue de la phase PH1, le signal optique est émis par les moyens d'émission E et transmis au cours d'une étape G2 aux différents équipements terminaux.

L'invention s'applique également à des réseaux optiques utilisant le multiplexage en longueur d'onde combiné au multiplexage temporel. De tels réseaux optiques sont appelés réseaux WDM/TDM (*Wavelength-Division Muliplexing* / *Time-Division Multiplexing*)*.*

Dans un tel réseau, une même composante optique est partagée entre une pluralité d'équipements terminaux. Chaque équipement terminal est connecté au central optique par une liaison optique qui lui est propre. Ainsi dans un réseau WDM/TDM une même composante optique est associée à au moins deux liaisons optiques distinctes.

Dans ce contexte, les moyens d'association 20 associent à une composante optique destinée à être transmises au travers d'une pluralité de liaisons optiques une puissance optique d'émission adaptée à la liaison optique qui présente le paramètre représentatif des pertes optiques le plus élevé parmi l'ensemble des liaisons optiques se partageant la composante optique.

Enfin, l'invention a également pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention. Ce programme lorsqu'il est exécuté permet de piloter les différents moyens constitutifs du dispositif d'émission 2 afin d'exécuter les différentes étapes du procédé d'émission objet de l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Dispositif d'émission (2) d'un signal optique comprenant au moins deux composantes optiques associées à des longueurs d'onde différentes et destinées à être transmises au travers respectivement d'au moins deux liaisons optiques aptes à être respectivement établies dans un réseau d'accès optique arborescent du type point à multipoints entre le dispositif d'émission et au moins deux équipements terminaux,
**caractérisé en ce que** le dispositif d'émission comprend des moyens d'association (20), en fonction d'au moins un paramètre représentatif de pertes optiques des liaisons optiques, d'au moins l'une des composantes optiques :
- à au moins une liaison optique choisie parmi lesdites liaisons optiques, et
- à une puissance optique d'émission adaptée audit au moins un paramètre représentatif de pertes optiques de ladite au moins une liaison optique choisie parmi lesdites liaisons optiques.

2. Dispositif d'émission selon la revendication 1, **caractérisé en ce que**, le signal optique ayant une puissance d'émission globale répartie de manière prédéterminée entre une pluralité de puissances optique d'émission respectivement associées auxdites composantes optiques, les moyens d'association (20) comprennent :
- des moyens d'ordonnancement (201) desdites composantes optiques en fonction de leur puissance d'émission respective,
- des moyens de détermination (202) de la liaison optique à associer à l'une desdites composantes optiques, en fonction dudit paramètre représentatif de pertes optique de ladite liaison optique.

3. Dispositif d'émission selon la revendication 2, **caractérisé en ce qu'**il comprend également des moyens de modification (203) de la répartition de la puissance d'émission globale dudit signal optique entre lesdites composantes optiques.

4. Dispositif d'émission selon la revendication 1, **caractérisé en ce que**, lesdites composantes optiques étant respectivement associées auxdites liaisons optiques, et le signal optique ayant une puissance d'émission globale répartie de manière prédéterminée entre une pluralité de puissances optiques d'émission respectivement associées auxdites composantes optiques, les moyens d'association comprennent des moyens de modification (301) de la répartition de la puissance d'émission globale dudit signal optique entre lesdites composantes optiques, en fonction desdits paramètres représentatifs de pertes optiques des liaisons optiques.

5. Procédé d'émission d'un signal optique comprenant au moins deux composantes optiques associées à des longueurs d'onde différentes et destinées à être transmises au travers respectivement d'au moins deux liaisons optiques aptes à être respectivement établies dans un réseau d'accès optique arborescent du type point à multipoints entre le dispositif d'émission du signal optique et au moins deux équipements terminaux,
**caractérisé en ce que** le procédé d'émission comprend une phase d'association (PH1), en fonction d'un paramètre représentatif de pertes optiques des liaisons optiques, d'au moins l'une des composantes optiques :
- à une liaison optique choisie parmi lesdites liaisons optiques, et
- à une puissance optique d'émission adaptée audit paramètre représentatif de pertes optiques de la liaison optique choisie parmi lesdites liaisons optiques

6. Procédé d'émission selon la revendication 5, **caractérisé en ce que**, le signal optique ayant une puissance d'émission globale répartie de manière prédéterminée entre une pluralité de puissances optiques d'émission respectivement associées auxdites composantes optiques, la phase d'association (PH1) comprend :
- une étape d'ordonnancement (E1,F2) desdites composantes optiques en fonction de leur puissance d'émission respective,
- une étape de détermination (E2,F3) de la liaison optique à associer à l'une desdites composantes optiques, en fonction dudit paramètre représentatif de pertes optique de ladite liaison optique.

7. Procédé d'émission selon la revendication 6, **caractérisé en ce qu'**il comprend préalablement à la phase d'association (PH1), une étape de modification (F1) de la répartition de la puissance d'émission globale dudit signal optique entre lesdites composantes optiques.

8. Procédé d'émission selon la revendication 5, **caractérisé en ce que**, lesdites composantes optiques étant respectivement associées auxdites liaisons optiques, et le signal optique ayant une puissance d'émission globale répartie de manière prédéterminée entre une pluralité de puissances optiques d'émission respectivement associées auxdites composantes optiques, la phase d'association (PH1) comprend une étape de modification (G1) de la répartition de la puissance d'émission globale dudit signal optique entre lesdites composantes optiques, en fonction desdits paramètres représentatifs de pertes optiques des liaisons optiques.

9. Central de télécommunication d'un réseau d'accès optique arborescent de type point à multipoints comprenant au moins un dispositif d'émission (2) d'un signal optique comprenant au moins deux composantes optiques associées à des longueurs d'onde différentes et destinées à être transmises au travers respectivement d'au moins deux liaisons optiques aptes à être respectivement établies dans ledit réseau entre le dispositif d'émission et au moins deux équipements terminaux,
**caractérisé en ce que** le dispositif d'émission (2) comprend des moyens d'association (20), en fonction d'un paramètre représentatif de pertes optique des liaisons optiques, d'au moins l'une des composantes optiques :
- à une liaison optique choisie parmi lesdites liaisons optiques, et
- à une puissance optique d'émission adaptée audit paramètre représentatif de pertes optiques de la liaison optique choisie parmi lesdites liaisons optiques

10. Programme d'ordinateur comprenant des instructions de code de programme pour l'exécution des étapes du procédé d'émission selon la revendication 5 lorsque ledit programme est exécuté par un processeur.

## Patentansprüche

1. Vorrichtung (2) zum Senden eines optischen Signals, umfassend mindestens zwei optische Komponenten, welche verschiedenen Wellenlängen zugeordnet und dazu bestimmt sind, quer über jeweils mindestens zwei optische Verbindungen übertragen zu werden, die geeignet sind, jeweils in einem optischen Zugangsnetz mit einer Baumstruktur vom Punkt-zu-Mehrpunkt-Typ zwischen der Sendevorrichtung und mindestens zwei Endgeräten hergestellt zu werden,
**dadurch gekennzeichnet, dass** die Sendevorrichtung umfasst: Mittel (20) zum Zuordnen, auf der Basis mindestens eines Parameters, der für optische Verluste von optischen Verbindungen repräsentativ ist, mindestens einer der optischen Komponenten:
- zu mindestens einer optischen Verbindung, die aus den optischen Verbindungen ausgewählt ist, und
- zu einer optischen Sendeleistung, die an den mindestens einen Parameter angepasst ist, der für optische Verluste der mindestens einen optischen Verbindung repräsentativ ist, die aus den optischen Verbindungen ausgewählt ist.

2. Sendevorrichtung nach Anspruch 1,
**dadurch gekennzeichnet, dass**, da das optische Signal eine globale Sendeleistung aufweist, welche vorherbestimmt zwischen mehreren optischen Sendeleistungen verteilt ist, die jeweils den optischen Komponenten zugeordnet sind, die Zuordnungsmittel (20) umfassen:
- Mittel (201) zum Reihen der optischen Komponenten auf der Basis ihrer jeweiligen Sendeleistung,
- Mittel (202) zum Bestimmen der optischen Verbindung, die einer der optischen Komponenten zuzuordnen ist, auf der Basis des Parameters, der für optische Verluste der optischen Verbindung repräsentativ ist.

3. Sendevorrichtung nach Anspruch 2,
**dadurch gekennzeichnet, dass** sie auch Mittel (203) zum Modifizieren der Verteilung der globalen Sendeleistung des optischen Signals zwischen den optischen Komponenten umfasst.

4. Sendevorrichtung nach Anspruch 1,
**dadurch gekennzeichnet, dass**, da die optischen Komponenten jeweils den optischen Verbindungen zugeordnet sind, und das optische Signal eine globale Sendeleistung aufweist, welche vorherbestimmt zwischen mehreren optischen Sendeleistungen verteilt ist, die jeweils den optischen Komponenten zugeordnet sind, die Zuordnungsmittel Mittel (301) zum Modifizieren der Verteilung der globalen Sendeleistung des optischen Signals zwischen den optischen Komponenten auf der Basis der Parameter umfassen, die für optische Verluste von optischen Verbindungen repräsentativ sind.

5. Verfahren zum Senden eines optischen Signals, umfassend mindestens zwei optische Komponenten, welche verschiedenen Wellenlängen zugeordnet und dazu bestimmt sind, quer über jeweils mindestens zwei optische Verbindungen übertragen zu werden, die geeignet sind, jeweils in einem optischen Zugangsnetz mit einer Baumstruktur vom Punkt-zu-Mehrpunkt-Typ zwischen der Sendevorrichtung des optischen Signals und mindestens zwei Endgeräten hergestellt zu werden,
**dadurch gekennzeichnet, dass** das Sendeverfahren umfasst: eine Phase (PH1) zum Zuordnen, auf der Basis eines Parameters, der für optische Verluste von optischen Verbindungen repräsentativ ist, mindestens einer der optischen Komponenten:
- zu einer optischen Verbindung, die aus den optischen Verbindungen ausgewählt wird, und
- zu einer optischen Sendeleistung, die an den Parameter angepasst ist, der für optische Verluste der optischen Verbindung repräsentativ ist, die aus den optischen Verbindungen ausgewählt wird.

6. Sendeverfahren nach Anspruch 5,
**dadurch gekennzeichnet, dass**, da das optische Signal eine globale Sendeleistung aufweist, welche vorherbestimmt zwischen mehreren optischen Sendeleistungen verteilt ist, die jeweils den optischen Komponenten zugeordnet sind, die Zuordnungsphase (PH1) umfasst:
- einen Schritt (E1, F2) des Reihens der optischen Komponenten auf der Basis ihrer jeweiligen Sendeleistung,
- einen Schritt (E2, F3) des Bestimmens der optischen Verbindung, die einer der optischen Komponenten zuzuordnen ist, auf der Basis des Parameters, der für optische Verluste der optischen Verbindung repräsentativ ist.

7. Sendeverfahren nach Anspruch 6,
**dadurch gekennzeichnet, dass** es, vor der Zuordnungsphase (PH1), einen Schritt (F1) des Modifizierens der Verteilung der globalen Sendeleistung des optischen Signals zwischen den optischen Komponenten umfasst.

8. Sendeverfahren nach Anspruch 5,
**dadurch gekennzeichnet, dass**, da die optischen Komponenten jeweils den optischen Verbindungen zugeordnet sind, und das optische Signal eine globale Sendeleistung aufweist, welche vorherbestimmt zwischen mehreren optischen Sendeleistungen verteilt ist, die jeweils den optischen Komponenten zugeordnet sind, die Zuordnungsphase (PH1) einen Schritt (G1) des Modifizierens der Verteilung der globalen Sendeleistung des optischen Signals zwischen den optischen Komponenten auf der Basis der Parameter umfasst, die für optische Verluste von optischen Verbindungen repräsentativ sind.

9. Telekommunikationszentrale eines optischen Zugangsnetzes mit einer Baumstruktur vom Punkt-zu-Mehrpunkt-Typ, umfassend mindestens eine Vorrichtung (2) zum Senden eines optischen Signals, umfassend mindestens zwei optische Komponenten, welche verschiedenen Wellenlängen zugeordnet und dazu bestimmt sind, quer über jeweils mindestens zwei optische Verbindungen übertragen zu werden, die geeignet sind, jeweils in dem Netz zwischen der Sendevorrichtung und mindestens zwei Endgeräten hergestellt zu werden,
**dadurch gekennzeichnet, dass** die Sendevorrichtung (2) umfasst: Mittel (20) zum Zuordnen, auf der Basis eines Parameters, der für optische Verluste von optischen Verbindungen repräsentativ ist, mindestens einer der optischen Komponenten:
- zu einer optischen Verbindung, die aus den optischen Verbindungen ausgewählt ist, und
- zu einer optischen Sendeleistung, die an den Parameter angepasst ist, der für optische Verluste der optischen Verbindung repräsentativ ist, die aus den optischen Verbindungen ausgewählt ist.

10. Rechnerprogramm, umfassend Programmcodeinstruktionen zur Ausführung der Schritte des Sendeverfahrens nach Anspruch 5, wenn das Programm von einem Prozessor ausgeführt wird.

## Claims

1. Device (2) for transmitting an optical signal comprising at least two optical components associated with different wavelengths and intended to be transmitted through, respectively, at least two optical links that can be respectively established in a tree-structured optical access network of the point-to-multipoint type between the transmission device and at least two terminal equipment items,
**characterized in that** the transmission device comprises means (20) for associating, as a function of at least one parameter representative of optical losses of the optical links, at least one of the optical components:
- with at least one optical link chosen from said optical links, and
- with an optical transmission power matched to said at least one parameter representative of optical losses of said at least one optical link chosen from said optical links.

2. Transmission device according to Claim 1, **characterized in that**, the optical signal having a total transmission power distributed in a predetermined manner between a plurality of optical transmission powers respectively associated with said optical components, the association means (20) comprise:
- means (201) for scheduling said optical components as a function of their respective transmission power,
- means (202) for determining the optical link to be associated with one of said optical components, as a function of said parameter representative of optical losses of said optical link.

3. Transmission device according to Claim 2, **characterized in that** it also comprises means (203) for modifying the distribution of the total transmission power of said optical signal between said optical components.

4. Transmission device according to Claim 1, **characterized in that**, said optical components being respectively associated with said optical links, and the optical signal having a total transmission power distributed in a predetermined manner between a plurality of optical transmission powers respectively associated with said optical components, the association means comprise means (301) for modifying the distribution of the total transmission power of said optical signal between said optical components, as a function of said parameters representative of optical losses of the optical links.

5. Method for transmitting an optical signal comprising at least two optical components associated with different wavelengths and intended to be transmitted through, respectively, at least two optical links that can be respectively established in a tree-structured optical access network of the point-to-multipoint type between the optical signal transmission device and at least two terminal equipment items,
**characterized in that** the transmission method comprises a phase of association (PH1), as a function of a parameter representative of optical losses of the optical links, of at least one of the optical components:
- with an optical link chosen from said optical links, and
- with an optical transmission power matched to said parameter representative of optical losses of the optical link chosen from said optical links.

6. Transmission method according to Claim 5, **characterized in that**, the optical signal having a total transmission power distributed in a predetermined manner between a plurality of optical transmission powers respectively associated with said optical components, the association phase (PH1) comprises:
- a step of scheduling (E1, F2) of said optical components as a function of their respective transmission power,
- a step of determination (E2, F3) of the optical link to be associated with one of said optical components, as a function of said parameter representative of optical losses of said optical link.

7. Transmission method according to Claim 6, **characterized in that** it comprises, prior to the association phase (PH1), a step of modification (F1) of the distribution of the total transmission power of said optical signal between said optical components.

8. Transmission method according to Claim 5, **characterized in that**, said optical components being respectively associated with said optical links, and the optical signal having a total transmission power distributed in a predetermined manner between a plurality of optical transmission powers respectively associated with said optical components, the association phase (PH1) comprises a step of modification (G1) of the distribution of the total transmission power of said optical signal between said optical components, as a function of said parameters representative of optical losses of the optical links.

9. Telecommunications exchange of a tree-structured optical access network of point-to-multipoint type comprising at least one device (2) for transmitting an optical signal comprising at least two optical components associated with different wavelengths and intended to be transmitted through, respectively, at least two optical links that can be respectively established in said network between the transmission device and at least two terminal equipment items,
**characterized in that** the transmission device (2) comprises means (20) for associating, as a function of a parameter representative of optical losses of the optical links, at least one of the optical components:
- with an optical link chosen from said optical links, and
- with an optical transmission power matched to said parameter representative of optical losses of the optical link chosen from said optical links.

10. Computer program comprising program code instructions for the execution of the steps of the transmission method according to Claim 5 when said program is executed by a processor.
